# EUROPEAN PATENT SPECIFICATION

(11) **EP 2 479 642 B1**
(45) Date of publication and mention of the grant of the patent: **16.08.2017**
(21) Application number: 11151755.3
(22) Date of filing: 21.01.2011
(51) Int. Cl.: G06F 1/32, G06F 3/0488

(54) **System and method for reducing power consumption in an electronic device having a touch-sensitive display**
System und Verfahren zur Reduktion des Stromverbrauchs in einer elektronischen Vorrichtung mit berührungsempfindlicher Anzeige
Système et procédé de réduction de la consommation d'énergie dans un dispositif électronique disposant d'un affichage tactile

(43) Date of publication of application: 25.07.2012
(73) Proprietor: BlackBerry Limited, Waterloo, ON N2K 0A7 (CA)
(72) Inventor: Theimer, Wolfgang, Michael, 44799, Bochum (DE); Drader, Marc, 38250, Lans En Vercors (FR)
(74) Representative: MERH-IP Matias Erny Reichl Hoffmann Patentanwälte PartG mbB

(56) References cited:
- WO-A1-2008/136551
- US-A1- 2008 309 631

## Description

### TECHNICAL FIELD

The present disclosure relates to electronic devices having touch-sensitive displays and the control of such electronic devices

### BACKGROUND

Electronic devices, including portable electronic devices, have gained widespread use and may provide a variety of functions including, for example, telephonic, electronic messaging and other personal information manager PIM application functions. Portable electronic devices include, for example, several types of mobile stations such as simple cellular telephones, smart telephones, wireless personal digital assistants PDAs, and laptop computers with wireless 802.11 or Bluetooth capabilities.

Portable electronic devices such as PDAs or smart telephones are generally intended for handheld use and ease of portability.. Smaller devices are generally desirable for portability.. A touch-sensitive display, also known as a touch screen or touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Portable electronic devices can typically individually control power supplied to different components of the device in order to save power and increase battery. For example, in a full power mode, the main components of the portable electronic device are supplied with power and are in an active state.. In a sleep mode, one or more components of the portable electronic device are not supplied with power, or are supplied with reduced power, and are in an inactive state.

Portable electronic devices can be transitioned from full power mode to sleep mode, or from sleep mode to full power mode using a soft power control system. For example, when the portable electronic device is in full power mode, a signal from an input key or a system software time-out signal will transition the portable electronic device to sleep mode, or vice versa.

Document WO 2008/136551-A1 discloses a method for waking up a sleep mode of an electronic device by using a touch sensing pad is provided in which the method includes steps of generating a touch signal caused by a user's touch on the touch sensing pad; generating touch pattern information based on a sequential structure of the touch signal; comparing the touch pattern information with stored authentication pattern information to judge whether or not both pattern information match each other; and outputting a sleep mode wake-up signal if it is judged that both pattern information match each other.

### BRIEF DESCRIPTION OF THE DRAWINGS

Embodiments of the present disclosure will now be described, by way of example only, with reference to the attached figures, in which:
FIG. 1 is a simplified block diagram of one example of a portable electronic device in accordance with the present disclosure;
FIG. 2 is a flow chart illustrating an example embodiment of a method for transitioning from sleep mode to full power mode based on a sequence of touch inputs;
FIG. 3 is a flow chart illustrating additional processes for the method shown in Fig. 2 according to an example embodiment of the present disclosure;
FIG. 4 is a flow chart illustrating additional processes for the method shown in Fig. 2 according to another example embodiment of the present disclosure;
FIG. 5A is an illustration of a slow scan mode transitioning to a fast scan mode upon detection of a touch input;
FIG. 5B is an illustration of a duty cycle in a slow scan mode;
FIG. 5C is an illustration of a duty cycle in a fast scan mode;
FIG. 6 is an illustration of a wake-up gesture; and
FIG. 7 is an graphical representation of multiple repetitions of the wake-up gesture in Fig. 6.

### DETAILED DESCRIPTION

An electronic device having a touch screen requires power in order to wait for, record and then process every touch input to determine if the recorded touch input matches an input intended to wake-up the device from an idle or sleep mode to a full-power mode. The power required for the waiting and monitoring for a wake-up input or gesture can be a drain on the battery of the device. Improvements in electronic devices with touch-sensitive displays are desirable. An improvement involves providing a method, and related system, that reduces power consumption during sleep mode while at the same time determining whether contact with the touch-sensitive display was intended to transition the electronic device to the full power mode.

The following disclosure describes a method and system for reducing power consumption in an electronic device by controlling the transition of the electronic device from a sleep mode to full power mode.. The method and system determines whether a sequence of touch inputs on the touch-sensitive overlay is intended to transition the electronic device to a full power mode from sleep mode.

Other aspects and features of the present disclosure will become apparent to those ordinarily skilled in the art upon review of the following description of example embodiments in conjunction with the accompanying figures

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein..

The disclosure generally relates to an electronic device, which is a portable electronic device in the example embodiments described herein. Examples of portable electronic devices include mobile, or handheld, wireless communication devices such as pagers, cellular phones, cellular smart-phones, wireless organizers, PDAs, wirelessly enabled notebook computers, netbooks, and so forth.. The portable electronic device may also include devices, such as a handheld electronic game device, digital photograph album, digital camera, or other device.

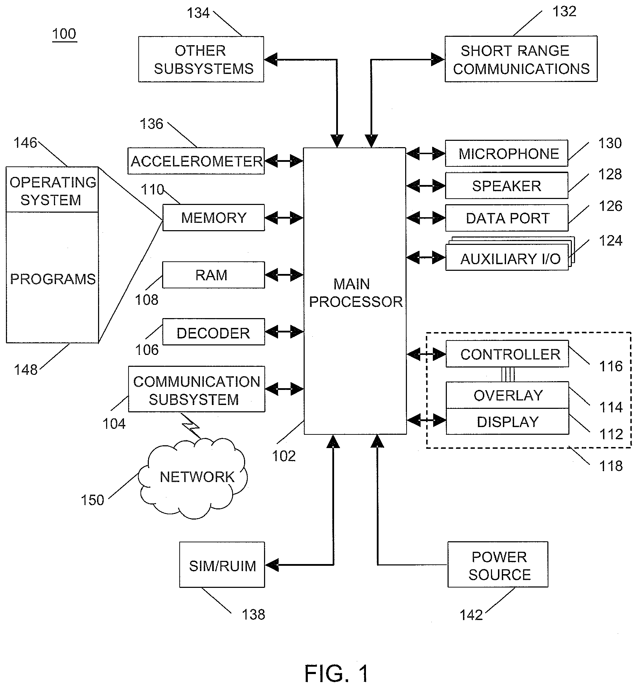

A block diagram of an example of a portable electronic device 100 is shown in FIG. 1. The portable electronic device 100 includes multiple components, such as a main processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from, and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The main processor 102 interacts with other components, such as Random Access Memory RAM 108, memory 110, a display 112 with a touch-sensitive overlay 114 operably connected to an overlay controller 116 that together comprise a touch-sensitive display 118, an auxiliary input/output I/O subsystem 124, a data port 126, a speaker 128, a microphone 130, short-range communications 132, and other device subsystems 134. Interaction with a graphical user interface is performed through the touch-sensitive overlay 114. The main processor 102 interacts with the touch-sensitive overlay 114 via the overlay controller 116 Information, such as text, characters, symbols, images, icons, and other items that may be displayed or rendered on a portable electronic device, is displayed on the touch-sensitive display 118 via the main processor 102. The main processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module SIM/RUIM card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The main processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing

The touch-sensitive display 118 may be any suitable touch-sensitive display, such as a capacitive, resistive, infrared, surface acoustic wave SAW touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover The capacitive touch sensor layers may be any suitable material, such as patterned indium tin oxide (ITO).

One or more touches, also known as touch contacts, touch inputs or touch events, may be detected by the touch-sensitive display 118. The main processor 102 and/or overlay controller 116 may determine and record attributes of the touch, including a location of a touch, a time stamp associated with the touch, and a pressure associated with the touch etc. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the overlay controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time

In sleep mode, one or more of the components of the portable electronic device 100 is not drawing power, or is drawing reduced power, from the battery. The transition from sleep mode to full power mode may be made in a single step, or may be made over multiple steps. A wake-up gesture can be utilized to transition the portable electronic device 100 from sleep mode to full power mode. A wake-up gesture allows the user of the portable electronic device 100 to draw a gesture on the touch-sensitive display 118 to wake up or unlock the portable electronic device 100 from sleep mode. As described above, the wake-up gesture may be a sequence of touch inputs within a predetermined duration of time. The wake-up gesture may include a sequence of substantially continuous touch events or a sequence of individual touch events within the predetermined duration of time. The wake-up gesture may be any arbitrarily shaped gesture and may be set by the portable electronic device 100 during initial set up or by the user. For example, the wake-up gesture may be selected from a plurality of pre-recorded wake-up gestures stored in a wake-up gesture library in the portable electronic device 100. Alternatively, the user can record a customized wake-up gesture that can be added to the wake-up gesture library.. The user-generated wake-up gesture or one of the pre-recoded wake-up gesture can then be selected as the pre-determined wake-up gesture to transition the device from the sleep mode to the full-power mode..

A wake-up gesture can also be associated with a user profile such that the portable electronic device 100 presents a unique set of applications customized according to the chosen user profile upon transitioning from a sleep mode to a full power mode. For example, for an individual user, one wake-up gesture may be associated with a work profile and another wake-up gesture may be associated with a personal profile. Each profile may have a different home screen with a different set of applications presented therein.

In addition, the portable electronic device may be used by multiple users, each having an associated wake-up gesture and a corresponding customized user profile.

Typically, processing every touch input to ascertain whether a touch input is a part of a wake-up gesture is power intensive. In addition, the main processor must be operating in full power mode to process each touch input, even when the touch input may be unintentional, for example, when the device is placed in a purse or a pocket. Routinely, the number of unintentional touch events exceeds the actual number of wake-up or unlock gestures. Thus, a method and system for reducing power consumption in an electronic device by controlling the transition of the electronic device from a sleep mode to a full power mode using a wake-up gesture is desirable.

According to one aspect of the present disclosure, the waiting for, recording and processing of a gesture to determine if the gesture corresponds to a pre-determined wake-up gesture is accomplished by distributing the processing of the touch inputs between the overlay controller 116 and the main processor 102. The overlay controller 116 and the main processor 102 have different power consumption and processing capabilities.

The overlay controller 116, also referred to as the touch panel controller, may have resource-constraints, limited memory and a slow interface compared to the host processor 102. Using the overlay controller 116 for preliminary gesture recognition, instead of the main processor 102, results in lower power usage. As the overlay controller 116 has limited processing capabilities, this advantageously results in further reduction of power usage.

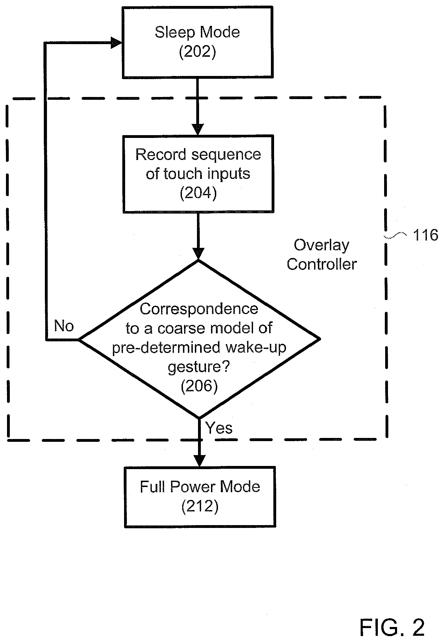

In an aspect, the method of reducing power consumption in the electronic device 100 is accomplished by controlling the transition of the electronic device from a sleep mode to a full power mode as shown in Fig. 2. While the electronic device, including the main processor 102, is in the sleep mode (202), the touch-sensitive overlay 114 and the overlay controller 116 can be maintained in full-power mode to detect and capture a sequence of touch inputs (or input gesture) on the touch-sensitive overlay (204). The overlay controller 116 can process a subset of the sequence of touch inputs to determine whether the sequence of touch inputs corresponds to a coarse model of a pre-determined wake-up gesture (206). Upon determining that the subset of the sequence of touch inputs matches a coarse model of the pre-determined wake-up gesture, the electronic device 100 can be transitioned from the sleep mode to the full power mode (212).

As described above, the overlay processor 116 has lower power requirements in comparison to the main processor 102. In order to advantageously utilize the lower power requirements of the overlay processor, the present method uses the overlay controller or processor 116 to monitor and capture touch inputs, including a sequence of touch inputs or gestures. Further, having regard to the limited processing capabilities of the overlay processor, only a subset of the sequence of touch inputs are used to compare to a coarse model of the pre-determined wake-up gesture. For example, 50% of the touch inputs of the sequence of touch inputs may be processed for determining whether the sequence of touch inputs corresponds to a coarse model of a pre-determined wake-up gesture.

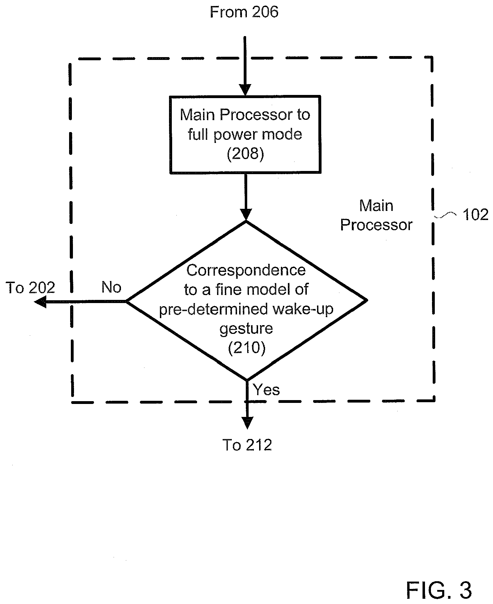

However, in some instances where a higher threshold of correspondence between the sequence of touch inputs and the pre-determined wake-up gesture is required, additional processing is desirable For example, the wake-up gesture may also be used as a passcode for locking or unlocking the electronic device. In such instances, upon successfully matching the input gesture with the pre-determined wake-up gesture using coarse models of the pre-determined wake-up gesture, the overlay processor may transition the main processor 102 to full power mode from the sleep mode (208), as shown in Fig. 3. The main processor 102 may then process the entire sequence of touch inputs, or a substantial part thereof, to determine further correspondence with the pre-determined wake-up gesture. This may be accomplished by comparing the entire sequence of the touch inputs to a fine model of the pre-determined wake-up gesture. Upon successful determination of a match between the input gesture and the fine model of the pre-determined wake-up gesture (210), the electronic device can be transitioned from the sleep mode to the full power mode.

It is noted that the terms "coarse model" and "fine model" are used herein to refer to the computational intensities required for feature extraction and classification. Typically, a coarse model check would be more tolerant for determining feature correspondence than a fine model. That is, the coarse model check may act as a first-level check to determine if a valid wake-up gesture is entered. On occasion, the coarse model check may result in a false-positive (resulting in a negative determination at the fine model check) or a false-negative (resulting in the electronic device remaining in the locked-up state or sleep mode), but the coarse model check avoids initiating the more intensive processing of a fine model check too frequently and the associated battery power consumption resulting in power savings.

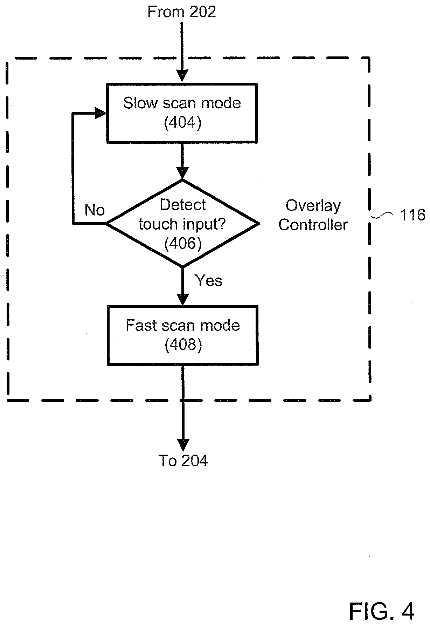

It is recognized that running the touch-sensitive overlay 114 and the overlay controller in the full power mode as described above in anticipation of touch inputs can be a drain on the battery power. In order to further reduce the power requirements associated with waiting for, recording and processing the input gesture, during the sleep mode, the touch-sensitive overlay 114, the overlay controller 116, or both the touch-sensitive overlay 114 and the overlay controller 116 can be maintained in a slow scan mode (404), as shown in Fig. 4. The slow scan mode comprises duty cycling the touch-sensitive overlay 114 and/or the overlay controller 116 between the full power mode for a first (or active) period of time and the sleep mode for a second (or inactive) period of time For reducing power consumption, the inactive period of time is substantially longer than the active period of time. Touch events are captured during the active period of time, when the touch-sensitive overlay 114 and the overlay controller 116 are in the full power mode.

Upon detecting a touch event (406), the touch-sensitive overlay 114 and overlay controller 116 are transitioned to a fast scan mode (408). The fast scan mode comprises duty cycling the touch-sensitive overlay 114 and the overlay controller 116 between the full power mode for an active period of time and the sleep mode for an inactive period of time, the inactive period of time in the fast scan mode being substantially shorter than the inactive period of time in the slow scan mode, to capture the sequence of touch inputs.

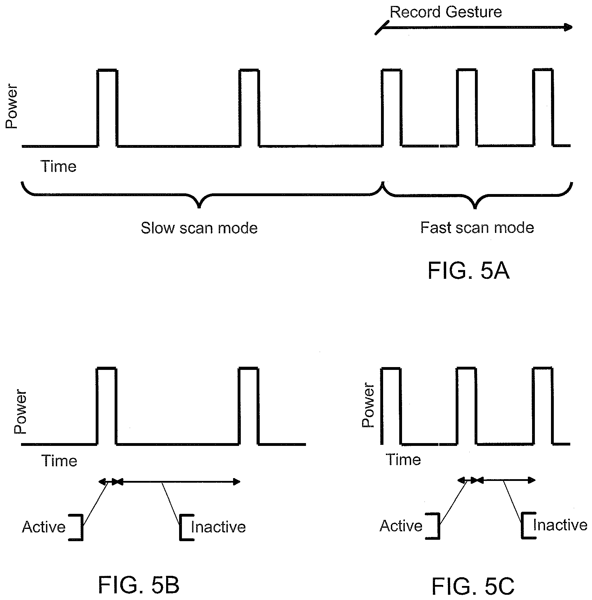

Examples of duty cycling are illustrated in Fig.. 5A through Fig. 5C. During a single duty cycle, the touch-sensitive overlay 114 and/or the overlay controller 116 are powered at full power mode for an "active" period of time and then powered at the sleep mode or reduced power level for the remaining time i.e. an "inactive" period of time, as illustrated in Fig 5A through Fig.. 5C. In various example embodiments, the sleep mode power level may correspond to a power level below full power depending on the desired level of power savings, but sufficiently high to maintain memory in a retention mode, where memory content is preserved but cannot be read out Sleep mode is also known as a deep sleep mode.

The slow scan mode is a duty cycle where the active and inactive periods are set to reduce power consumption, which may inherently reduce the accuracy of capturing a gesture. The fast scan mode is a duty cycle where the active and inactive periods have been set to increase accuracy of capturing a gesture, which may thereby increase power consumption. Figure 5A illustrates an embodiment where a gesture is recorded in a fast scan mode.

The active and inactive periods of time while duty cycling can be set in view of the typical lengths of various wake-up gestures. Detection and/or capturing of short gestures can use a greater proportion of active periods vs.. inactive periods, or can use shorter inactive periods or both. Detection and/or capturing of long gestures can use a lower proportion of active periods vs. inactive periods, or can use longer inactive periods, or both. The various time periods in the slow scan mode and the fast scan mode can be optimized based on the characteristics of the pre-determined wake up gesture, such as duration, complexity etc.

In various aspects of the present disclosure, once the overlay controller 116 detects a touch input, the touch-sensitive overlay 114 and the overlay controller 116 are transitioned from a slow scan mode to a fast scan mode in order to capture the input gesture, as illustrated in Fig. 5A. In other aspects, when the overlay controller 116 detects a touch input, the touch-sensitive overlay 114 and overlay controller 116 maintain their duty cycle and capture the gesture, for instance, when the touch-sensitive overlay 114 and the overlay controller 116 are already in the fast scan mode, as shown in Fig. 5C.

Examples of slow and fast scan duty cycles are illustrated in Fig. 5B and Fig. 5C, respectively. Figure 5B illustrates a slow scan duty cycle with an inactive period that is substantially longer than the active period. Figure 5C illustrates a fast scan duty cycle with an inactive period that is substantially shorter than the inactive period of the slow scan duty cycle illustrated in Fig. 5B. That is, in the fast scan duty cycle, the touch-sensitive overlay and the overlay controller are active (at full power) more frequently.

In initial trials, the typical duration of gestures varied between 800 ms to 2000 ms. During a slow scan mode, which is set to reduce power consumption, the initial part of the input gesture may be undetected For instance, the input gesture of the first touch event of the sequence of touch events may commence just as the touch-sensitive overlay 114 and the overlay controller 116 transition from the full power mode to the sleep mode. The touch input will then be detected only during the active period of the next duty cycle. Thus, the initial part of the input gesture up to the time interval of inactive part of the duty cycle will not be detected. However, the input gesture matching algorithms can be designed to tolerate such instances. For example, gesture matching processes can tolerate up to 10-15% of missing or undetected inputs, i.e., the initial 80-120 ms of a short wake-up gesture of 800 ms duration may go undetected and yet the input gestures can be successfully matched. Current limitations in electronics dictate that an active period of 5 ms is needed for detecting a touch input. Thus, for a gesture of 800 ms in duration, the slow scan duty cycle has to be 85-125 ms (approximately 6% to 4% of active period per duty cycle). For longer gestures, a slow scan mode with 2% active period per duty cycle may suffice. Thus, the duration of a slow scan mode can be set based on the characteristics of the pre-determined wake-up gesture, such as its duration or complexity.

It is observed that a typical touch event can be captured approximately every 20 ms. Thus, a typical fast scan mode may have a 5 ms active period and 15 ms inactive period (25% active period per duty cycle). The duration of the active period is typically maintained at 5ms, while the duration of the inactive period can be optimized based on the duration of the pre-determined wake-up gesture.

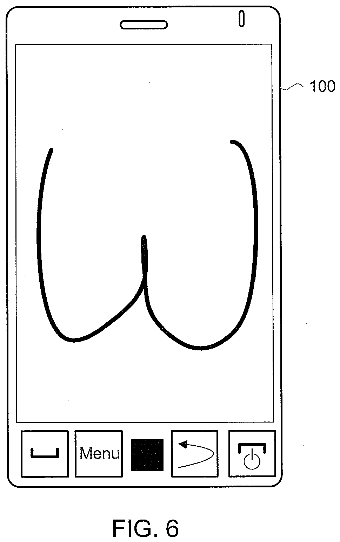

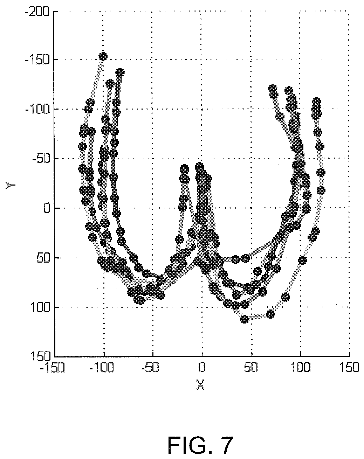

The overlay controller 116 can be used to capture the sequence of touch inputs or the input gesture as shown in Fig.. 6. Figure 7 shows multiple repetitions of the input gesture illustrated in Fig. 6, which may be used, for example, to generate characteristics of a pre-determined wake up gesture or for training purposes. The overlay controller 116 can store the coordinates of points along the path of the input gesture, and the related time stamps, in the overlay controller memory (not shown). When the overlay controller 116 is recording and/or initially determining whether or not the recorded input gesture corresponds to the pre-determined wake-up gesture, only the touch-sensitive overlay 114 and the overlay controller 116 draw power, while the remaining components of the portable electronic device 100 are in sleep mode. In Fig 6, the black dots correspond to captured touch events (also referred to as touch inputs or data points).. In a coarse model (or a first order model), the data points are connected by line segments and a match with the pre-determined wake-up gesture may be determined based on an accumulation of the length of the line segments. Whereas, in a fine model, the curvatures of the input gesture and the pre-determined wake-up gesture may be computed and more complex distance metrics may be used for the determination of a match.

As described earlier, the overlay controller 116 determines whether or not the input gesture and the pre-determined wake-up gesture correspond, using a subset of the touch inputs, i.e., fewer data points than used by the main processor 102. The main processor 102 can model the actual path of the input gesture by interpolating the sequence of touch inputs with a fixed number of data points for a fine match.

Each touch input captured by the overlay controller 116 is associated with a measured parameter.. The measured parameter may be a location of the touch input, a time stamp of the touch input or a pressure of the touch input. The measured parameters of each of the touch inputs of the sequence of touch inputs forming the input gesture can be used for determining whether or not the input gesture corresponds to the pre-determined wake-up gesture. For coarse matching by the overlay controller 116, only a subset of the sequence of touch inputs is used, while the entire sequence of touch inputs, or a substantial part thereof, is used for fine matching by the main processor 102. The measured parameters of the touch inputs can be used to determine the total length, the total time duration, the sum of coordinate differences between adjacent points in an x- and y- direction etc. of the input gesture.. In addition, velocity changes along the path, the standard deviation in the x- or y-direction, or a combination of any of these variables, and comparing the determined variable(s) or parameter(s) with the corresponding variable(s) for the pre-determined wake-up gesture.

For example, in a coarse match determination by the overlay controller 116, the total time duration of the input gesture can be matched with the total duration of the pre-determined wake-up gesture by using only the starting and ending touch inputs of the input gesture.

The input gesture can be said to correspond to the pre-determined wake-up gesture when the difference between one or more measured variable(s) of the input gesture and the corresponding variable(s) of the pre-determined wake-up gesture is within a threshold difference level(s).. For example, the input gesture can be determined to correspond to the pre-determined wake-up gesture when the difference between the lengths of the input gesture and the pre-recoded wake-up gesture is less than 5% of the length of the pre-determined wake-up gesture. In another example, the input gesture can be determined to correspond to the pre-determined wake-up gesture when the difference between the total time durations of the input gesture and the pre-determined wake-up gesture is less than 10% of the total time duration of the pre-determined wake-up gesture. The threshold difference level of a measured variable can be, independently from any other threshold error level, 5%, 10%, 15% or 20% of the value of the corresponding variable of the pre-determined wake-up gesture.

If, after detecting a touch input, the overlay controller 116 does not detect any further touch inputs on the touch-sensitive overlay within a predetermined period of time, the touch-sensitive overlay 114 and the overlay controller 116 may be maintained in the slow scan mode for a predetermined lock-out period of time. This is advantageous when there is a spurious or inadvertent touch input that does not correspond to wake-up gesture. By maintaining the touch-sensitive overlay 114 and the overlay controller 116 in the slow scan mode for a predetermined lock-out period of time, unnecessary transitioning to the fast scan mode is prevented, thereby resulting in power savings.

Similarly, upon determining that the sequence of touch inputs does not correspond to the coarse model of the pre-determined wake-up gesture, the touch-sensitive overlay 114 and the overlay controller 116 may be maintained in the slow scan mode for a predetermined lock-out period of time. For example, touch inputs which do not correspond to the pre-determined wake-up gesture, can lead to undesirable power consumption. An unintended but continuous touch input could be considered an input gesture. In such a situation, the personal electronic device 100 would transition to a fast scan mode and record the input gesture. Processing the unintended input gesture and determining that the unintended input gesture does not correspond to the pre-determined wake-up gesture would transition the personal electronic device back into the slow scan mode. However, since the touch input is unintended and continuous, the personal electronic device 100 would again transition to the fast scan mode, undesirably consuming power.. In order to avoid such repeated transition to fast scan mode, a time-out or lock-out period of time may be used. After the overlay controller 116 determines that the input gesture does not correspond to the pre-determined wake-up gesture, the touch-sensitive overlay and the overlay controller may be maintained in the slow scan mode for the duration of the lock-out period.

Any or all of (1) slow and fast scan modes having varying duty cycles, (2) rejection of non-gestures, (3) coarse match determination by the overlay controller that the input gesture and the pre-determined wake-up gesture correspond, or (4) further processing by the main processor once the input gesture and the pre-determined wake-up gesture are coarse matched, can be used to reduce the power consumption of the portable electronic device during a sleep mode while still determining whether contact with the touch-sensitive display was intended to transition the portable electronic device to full power mode.

In the foregoing description, for purposes of explanation, numerous details are set forth in order to provide a thorough understanding of the present disclosure. However, it will be apparent to one skilled in the art that these specific details are not required. In other instances, well-known electrical structures and circuits are shown in block diagram form in order not to obscure the present disclosure. For example, specific details are not provided as to whether the embodiments described herein are implemented as a software routine, hardware circuit, firmware, or a combination thereof.

Example embodiments described herein may be represented as a software product stored in a machine-readable medium (also referred to as a computer-readable medium, a processor-readable medium, or a computer usable medium having a computer readable program code embodied therein). The machine-readable medium may be any suitable tangible medium, including magnetic, optical, or electrical storage medium including a diskette, compact disk read only memory (CD-ROM), memory device (volatile or nonvolatile), or similar storage mechanism.. The machine-readable medium may contain various sets of instructions, code sequences, configuration information, or other data, which, when executed, cause a processor to perform steps in a method according to an embodiment Those of ordinary skill in the art will appreciate that other instructions and operations necessary to implement the described embodiments may also be stored on the machine-readable medium Software running from the machine readable medium may interface with circuitry to perform the described tasks.

While the example embodiments described herein are directed to particular implementations of the portable electronic device and method of controlling the portable electronic device, the above-described embodiments are intended to be examples. Alterations, modifications and variations may be effected to the particular embodiments by those of skill in the art without departing from the scope of the present disclosure.

## Claims

1. A method for reducing power consumption in an electronic device (100) by controlling the transition of the electronic device from a sleep mode (202) to a full power mode (212), the electronic device comprising a main processor (102), a touch-sensitive overlay (114), and an overlay controller (116), the method comprising:
detecting and capturing a sequence of touch inputs on the touch-sensitive overlay using the overlay controller while the main processor is in the sleep mode (204);
processing a subset of the sequence of touch inputs using the overlay controller to determine that the sequence of touch inputs corresponds to a coarse model of a pre-determined wake-up gesture, the pre-determined wake-up gesture being adapted to transition the electronic device from the sleep mode to the full-power mode (206);
transitioning the main processor from the sleep mode to the full power mode (208);
processing the entire sequence of touch inputs using the main processor to determine that the sequence of touch inputs corresponds to a fine model of the pre-determined wake-up gesture;
and,
transitioning the electronic device from the sleep mode to the full power mode (212).

2. The method of claim 1, wherein, prior to capturing the sequence of touch inputs, the method further comprises:
maintaining the touch-sensitive overlay and the overlay controller in a slow scan mode, the slow scan mode comprising duty cycling the touch-sensitive overlay and the overlay controller between the full power mode for a first period of time and the sleep mode for a second period of time, the second period of time being substantially longer than the first period of time (404); and,
upon detecting a touch input on the touch-sensitive overlay (406),
transitioning the touch-sensitive overlay and the overlay controller to a fast scan mode, the fast scan mode comprising duty cycling the touch-sensitive overlay and the overlay controller between the full power mode for the first period of time and the sleep mode for a third period of time, the third period of time being substantially shorter than the second period of time, to capture the sequence of touch inputs (408).

3. The method of claim 2, wherein upon detecting no further touch input on the touch-sensitive overlay within a predetermined period of time, maintaining the touch-sensitive overlay and the overlay controller in the slow scan mode for a pre-determined lock-out period of time.

4. The method of claim 2, wherein, upon determining that the sequence of touch inputs does not correspond to the coarse model of the pre-determined wake-up gesture, maintaining the touch-sensitive overlay and the overlay controller in the slow scan mode for a predetermined lock-out period of time.

5. The method of claim 1, wherein each touch input of the sequence of touch inputs is associated with a measured parameter.

6. The method of claim 5, wherein processing the subset of the sequence of touch inputs using the overlay controller comprises comparing the measured parameter of each touch input in the subset of the sequence of touch inputs to a corresponding parameter of the coarse model of the pre-determined wake-up gesture.

7. The method of claim 5, wherein processing the entire sequence of touch inputs using the main processor comprises comparing the measured parameter of each touch input in the entire sequence of touch inputs to a corresponding parameter of the fine model of the pre-determined wake-up gesture.

8. The method of claim 5, wherein the measured parameter is a location of the touch input, a time stamp of the touch input, or a pressure of the touch input.

9. The method of any of claims 1 to 8, wherein the pre-determined wake-up gesture is selected from a plurality of pre-recorded wake-up gestures stored in a wake-up gesture library of the electronic device.

10. The method of any of claims 1 to 9, wherein the pre-determined wake-up gesture is a user-generated wake-up gesture.

11. The method of any of claims 1 to 10, wherein the pre-determined wake-up gesture corresponds to a user profile.

12. An electronic device (100) comprising:
a main processor (102);
a touch-sensitive overlay (114); and
an overlay controller (116),
wherein the overlay controller, or the overlay controller and the main processor, being configured to perform the method of any of claims 1 to 11.

13. A computer-readable medium having tangibly recorded thereon a set of non-transitory instructions for execution by an electronic device having a main processor, a touch-sensitive overlay, and an overlay controller, the non-transitory instructions for carrying out the method of any of claims 1 to 11 for reducing power consumption in the electronic device by controlling the transition of the electronic device from a sleep mode to a full power mode.

## Patentansprüche

1. Verfahren zum Reduzieren eines Leistungsverbrauchs in einer elektronischen Vorrichtung (100) durch Steuern des Überführens der elektronischen Vorrichtung von einem Ruhemodus (202) in einen Vollleistungsmodus (212), wobei die elektronische Vorrichtung einen Hauptprozessor (102), eine berührungsempfindliche Überlagerung (114) und eine Überlagerungssteuervorrichtung (116) aufweist, wobei das Verfahren aufweist:
Detektieren und Erfassen einer Sequenz von Berührungseingaben auf der berührungsempfindlichen Überlagerung unter Verwendung der Überlagerungssteuervorrichtung, während der Hauptprozessor in dem Ruhemodus ist (204);
Verarbeiten eines Teilsatzes der Sequenz von Berührungseingaben unter Verwendung der Überlagerungssteuervorrichtung, um zu bestimmen, dass die Sequenz der Berührungseingaben einem groben Modell einer vorgegebenen Aufweckgeste entspricht, wobei die vorgegebene Aufweckgeste ausgebildet ist zum Überführen der elektronischen Vorrichtung von dem Ruhemodus in den Vollleistungsmodus (206);
Überführen des Hauptprozessors von dem Ruhemodus in den Vollleistungsmodus (208);
Verarbeiten der gesamten Sequenz von Berührungseingaben unter Verwendung des Hauptprozessors, um zu bestimmen, dass die Sequenz von Berührungseingaben einem feinen Modell der vorgegebenen Aufweckgeste entspricht; und
Überführen der elektronischen Vorrichtung von dem Ruhemodus in den Vollleistungsmodus (212).

2. Das Verfahren gemäß Anspruch 1, wobei vor dem Erfassen der Sequenz von Berührungseingaben das Verfahren weiter aufweist:
Beibehalten der berührungsempfindlichen Überlagerung und der Überlagerungssteuervorrichtung in einem langsamen Abtastmodus, wobei der langsame Abtastmodus ein Ausführen eines Arbeitszyklus für die berührungsempfindliche Überlagerung und die Überlagerungssteuervorrichtung zwischen dem Vollleistungsmodus für eine erste Zeitperiode und dem Ruhemodus für eine zweite Zeitperiode aufweist, wobei die zweite Zeitperiode wesentlich länger als die erste Zeitperiode ist (404); und
bei einem Erfassen einer Berührungseingabe auf der berührungsempfindlichen Überlagerung (406),
Überführen der berührungsempfindlichen Überlagerung und der Überlagerungssteuervorrichtung in einen schnellen Abtastmodus, wobei der schnelle Abtastmodus ein Ausführen eines Arbeitszyklus für die berührungsempfindliche Überlagerung und die Überlagerungssteuervorrichtung zwischen dem Vollleistungsmodus für die erste Zeitperiode und dem Ruhemodus für eine dritte Zeitperiode aufweist, wobei die dritte Zeitperiode wesentlich kürzer als die zweite Zeitperiode ist, um die Sequenz von Berührungseingaben zu erfassen (408).

3. Das Verfahren gemäß Anspruch 2, wobei, bei einem Erfassen keiner weiteren Berührungseingabe auf der berührungsempfindlichen Überlagerung innerhalb einer vorgegebenen Zeitdauer, Beibehalten der berührungsempfindlichen Überlagerung und der Überlagerungssteuervorrichtung in dem langsamen Abtastmodus für eine vorgegebene Sperrzeitperiode.

4. Das Verfahren gemäß Anspruch 2, wobei, bei einem Bestimmen, dass die Sequenz von Berührungseingaben nicht dem groben Modell der vorgegebenen Aufweckgeste entspricht, Beibehalten der berührungsempfindlichen Überlagerung und der Überlagerungssteuervorrichtung in dem langsamen Abtastmodus für eine vorgegebene Sperrzeitperiode.

5. Das Verfahren gemäß Anspruch 1, wobei jede Berührungseingabe der Sequenz von Berührungseingaben mit einem gemessenen Parameter assoziiert ist.

6. Das Verfahren gemäß Anspruch 5, wobei das Verarbeiten des Teilsatzes der Sequenz von Berührungseingaben unter Verwendung der Überlagerungssteuervorrichtung ein Vergleichen des gemessenen Parameters jeder Berührungseingabe in dem Teilsatz der Sequenz von Berührungseingaben mit einem entsprechenden Parameter des groben Modells der vorgegebenen Aufweckgeste aufweist.

7. Das Verfahren gemäß Anspruch 5, wobei das Verarbeiten der gesamten Sequenz von Berührungseingaben unter Verwendung des Hauptprozessors ein Vergleichen des gemessenen Parameters jeder Berührungseingabe in der gesamten Sequenz von Berührungseingaben mit einem entsprechenden Parameter des feinen Modells der vorgegebenen Aufweckgeste aufweist.

8. Das Verfahren gemäß Anspruch 5, wobei der gemessene Parameter eine Position der Berührungseingabe, ein Zeitstempel der Berührungseingabe oder ein Druck der Berührungseingabe ist.

9. Das Verfahren gemäß einem der Ansprüche 1 bis 8, wobei die vorgegebene Aufweckgeste aus einer Vielzahl von vorher aufgezeichneten Aufweckgesten ausgewählt wird, die in einer Aufweckgesten-Bibliothek der elektronischen Vorrichtung gespeichert sind.

10. Das Verfahren gemäß einem der Ansprüche 1 bis 9, wobei die vorgegebene Aufweckgeste eine benutzererzeugte Aufweckgeste ist.

11. Das Verfahren gemäß einem der Ansprüche 1 bis 10, wobei die vorgegebene Aufweckgeste einem Benutzerprofil entspricht.

12. Elektronische Vorrichtung (100), die aufweist:
einen Hauptprozessor (102);
eine berührungsempfindliche Überlagerung (114); und
eine Überlagerungssteuervorrichtung (116),
wobei die Überlagerungssteuervorrichtung, oder die Überlagerungssteuervorrichtung und der Hauptprozessor, konfiguriert ist/sind zum Durchführen des Verfahrens gemäß einem der Ansprüche 1 bis 11.

13. Ein computerlesbares Medium mit materiell darauf gespeichertem Satz von nicht-transitorischen Anweisungen zur Ausführung durch eine elektronische Vorrichtung mit einem Hauptprozessor, einer berührungsempfindlichen Überlagerung und einer Überlagerungssteuervorrichtung, wobei die nicht-transitorischen Anweisungen vorgesehen sind zum Ausführen des Verfahrens gemäß einem der Ansprüche 1 bis 11 zum Reduzieren eines Leistungsverbrauchs in der elektronischen Vorrichtung durch Steuern der Überführung der elektronischen Vorrichtung von einem Ruhemodus in einen Vollleistungsmodus.

## Revendications

1. Procédé pour réduire la consommation d'énergie dans un dispositif électronique (100) par commande de la transition du dispositif électronique d'un mode de veille (202) à un mode de pleine puissance (212), le dispositif électronique comprenant un processeur principal (102), un revêtement sensible au toucher (114) et un dispositif de commande de revêtement (116), le procédé comprenant :
la détection et la capture d'une séquence d'entrées tactiles sur le revêtement sensible au toucher à l'aide du dispositif de commande de revêtement lorsque le processeur principal est dans le mode de veille (204) ;
le traitement d'un sous-jeu de la séquence d'entrées tactiles à l'aide du dispositif de commande de revêtement de façon à déterminer que la séquence d'entrées tactiles correspond à un modèle grossier d'un geste d'éveil prédéterminé, le geste d'éveil prédéterminé étant adapté de façon à faire effectuer au dispositif électronique une transition du mode de veille au mode de pleine puissance (206) ;
la réalisation d'une transition du processeur principal du mode de veille au mode de pleine puissance (208) ;
le traitement de la totalité de la séquence d'entrées tactiles à l'aide du processeur principal de façon à déterminer que la séquence d'entrées tactiles correspond à un modèle fin du geste d'éveil prédéterminé ; et
la réalisation d'une transition du dispositif électronique du mode d'éveil au mode de pleine puissance (212).

2. Procédé selon la revendication 1, dans lequel, avant la capture de la séquence d'entrées tactiles, le procédé comprend de plus :
le maintien du revêtement sensible au toucher et du dispositif de commande de revêtement dans un mode de balayage lent, le mode de balayage lent comprenant la réalisation d'un rapport cyclique du revêtement sensible au toucher et du dispositif de commande de revêtement entre le mode de pleine puissance pendant une première période de temps et le mode de veille pendant une deuxième période de temps, la deuxième période de temps étant sensiblement plus longue que la première période de temps (404) ; et
lors de la détection d'une entrée tactile sur le revêtement sensible au toucher (406),
la réalisation d'une transition du revêtement sensible au toucher et du dispositif de commande de revêtement vers un mode de balayage rapide, le mode de balayage rapide comprenant la réalisation d'un rapport cyclique du revêtement sensible au toucher et du dispositif de commande de revêtement entre le mode de pleine puissance pendant la première période de temps et le mode de veille pendant une troisième période de temps, la troisième période de temps étant sensiblement plus courte que la deuxième période de temps, de façon à capturer la séquence d'entrées tactiles (408).

3. Procédé selon la revendication 2, dans lequel, lors de la détection du fait qu'il n'y a aucune autre entrée tactile sur le revêtement sensible au toucher à l'intérieur d'une période de temps prédéterminée, le revêtement sensible au toucher et le dispositif de commande de revêtement sont maintenus dans le mode de balayage lent pendant une période de temps de verrouillage prédéterminée.

4. Procédé selon la revendication 2, dans lequel, lors de la détermination du fait que la séquence d'entrées tactiles ne correspond pas au modèle grossier du geste d'éveil prédéterminé, le revêtement sensible au toucher et le dispositif de commande de revêtement sont maintenus dans le mode de balayage lent pendant une période de temps de verrouillage prédéterminée.

5. Procédé selon la revendication 1, dans lequel chaque entrée tactile de la séquence d'entrées tactiles est associée à un paramètre mesuré.

6. Procédé selon la revendication 5, dans lequel le traitement du sous-jeu de la séquence d'entrées tactiles à l'aide du dispositif de commande de revêtement comprend la comparaison du paramètre mesuré de chaque entrée tactile dans le sous-jeu de la séquence d'entrées tactiles à un paramètre correspondant du modèle d'entrée grossier du geste d'éveil prédéterminé.

7. Procédé selon la revendication 5, dans lequel le traitement de la totalité de la séquence d'entrées tactiles à l'aide du processeur principal comprend la comparaison du paramètre mesuré de chaque entrée tactile dans la totalité de la séquence d'entrées tactiles à un paramètre correspondant du modèle fin du geste d'éveil prédéterminé.

8. Procédé selon la revendication 5, dans lequel le paramètre mesuré est un emplacement de l'entrée tactile, une estampille temporelle de l'entrée tactile, ou une pression de l'entrée tactile.

9. Procédé selon l'une quelconque des revendications 1 à 8, dans lequel le geste d'éveil prédéterminé est sélectionné parmi une pluralité de gestes d'éveil préenregistrés mémorisés dans une bibliothèque de gestes d'éveil du dispositif électronique.

10. Procédé selon l'une quelconque des revendications 1 à 9, dans lequel le geste d'éveil prédéterminé est un geste d'éveil généré par l'utilisateur.

11. Procédé selon l'une quelconque des revendications 1 à 10, dans lequel le geste d'éveil prédéterminé correspond à un profil d'utilisateur.

12. Dispositif électronique (100), comprenant :
un processeur principal (102) ;
un revêtement sensible au toucher (114) ; et
un dispositif de commande de revêtement (116),
dans lequel le dispositif de commande de revêtement, ou le dispositif de commande de revêtement et le processeur principal, sont configurés de façon à mettre en oeuvre le procédé selon l'une quelconque des revendications 1 à 11.

13. Support lisible par un ordinateur, comportant, enregistré de façon tangible sur celui-ci, un jeu d'instructions non transitoires pour l'exécution par un dispositif électronique comportant un processeur principal, un revêtement sensible au toucher et un dispositif de commande de revêtement, les instructions non transitoires étant destinées à mettre en oeuvre le procédé selon l'une quelconque des revendications 1 à 11 pour réduire la consommation d'énergie dans le dispositif électronique par commande de la transition du dispositif électronique d'un mode de veille à un mode de pleine puissance.
